# EUROPÄISCHE PATENTSCHRIFT

(11) **EP 0 380 772 B1**
(45) Veröffentlichungstag und Bekanntmachung des Hinweises auf die Patenterteilung: **14.04.1993**
(21) Anmeldenummer: 89121649.1
(22) Anmeldetag: 23.11.1989
(51) Int. Cl.: B60C 9/18, B60C 1/00

(54) **Rutschsicherer Reifen mit langer Haltbarkeit**
Long-lasting slip-proof tyre
Pneumatique à adhérence et longévité

(30) Priorität: 28.01.1989 DE 3902602
(43) Veröffentlichungstag der Anmeldung: 08.08.1990
(73) Patentinhaber: Continental Aktiengesellschaft, 30165 Hannover (DE)
(72) Erfinder: Holzbach, Wolfgang, Dr., D-3008 Garbsen 4 (DE)

(56) Entgegenhaltungen:
- EP-A- 0 106 838
- EP-A- 0 341 187
- FR-A- 2 215 331
- GB-A- 2 150 509

## Beschreibung

Die Erfindung bezieht sich auf einen Fahrzeugluftreifen gemäß dem Oberbegriff des Anspruches 1. Solche Reifen enthalten in der äußeren Laufstreifenschicht üblicherweise 30 % bis 35 % Weichmacher und in der inneren Laufstreifenschicht etwa 5 % weniger Weichmacher, wobei die A-Shore-Härte der inneren Laufstreifenschicht um etwa 2 bis 4 höher liegt als die der äußeren Laufstreifenschicht. Die an die innere Laufstreifenschicht anschließende äußere Gürtellage weist üblicherweise gegenüber der inneren Laufstreifenschicht eine um 7 bis 10 höhere A-Shore-Härte auf. In dem monotonen Härteanstieg von radial außen nach radial innen bis zu den Gürtellagen befindet sich also der größte Härteanstieg an der Verbindungsfläche zwischen der inneren Laufstreifenschicht und der äußeren Gürtellage. Die A-Shore-Härte der äußeren Laufstreifenschicht der bekannten gattungsgemäßen Reifen liegt zwischen 64 und 69.

Einige Jahre nach Herstellung zeigen die bekannten Reifen eine Weichmacherdiffusion von der Lauffläche in die die Festigkeitsträger des Gürtels umgebende Gummi-Mischung. Dadurch wird die Haltbarkeit des Gürtelverbandes nach langer Nutzungsdauer ungünstig beeinflußt.

Es stellt sich die Aufgabe, den Gürtelverband über eine möglichst lange Zeit vor einem solchen Einfluß zu schützen, um Haltbarkeitseinbußen vorzubeugen.

Die Aufgabe wird erfindungsgemäß gelöst durch die kennzeichnenden Merkmale des Anspruches 1. Die Lösung läßt sich nach bisheriger Erkenntnis so deuten, daß die allmähliche Diffusion der im Laufstreifen verwendeten Weichmacher in die Gürtellagen gedrosselt wird. Hierdurch wird die Aufweichung der Gürtellagen verzögert; insbesondere wird die allmähliche Vergrößerung der Verformungswege in den hochbeanspruchten Reifenschultern und die damit bislang einhergehende Alterung verzögert. Für diese Deutung spricht unter anderem die in aufwendigen Versuchen gewonnene Erkenntnis, daß die beklagten Ablösungen an den Rändern der Gürtellagen ihren Anfang nahmen und sich bis zur Mitte hin ausbreiteten. Der Kern der Lösung liegt also darin, daß die untere Laufstreifenschicht als Diffusionsdrossel und Auffangbecken für Weichmacher ausgebildet ist, weshalb die untere Laufstreifenschicht selbst nur wenig, gegebenenfalls gar keine, Weichmacher enthält, und daß die Sperr- und Auffangwirkung über den Rändern der Gürtellagen besonders ausgeprägt sind. Infolge der Dickenverringerung der inneren Laufstreifenschicht in der Reifenmitte bleibt die Beweglichkeit der in der äußeren Laufstreifenschicht eingeprägten Profilklötze in dem für das Laufgeräusch und die Traktion besonders wichtigen Mittenbereich erhalten. Vorzugsweise ist die innere Schicht des Laufstreifens über den Rändern der Gürtellagen mindestens doppelt so dick wie in der Reifenmitte.

Die richtige Härte bleibt in den Gürtellagenrändern dann besonders lange Zeit erhalten, wenn die innere Schicht des Laufstreifens die gleiche Weichmacherdosierung aufweist wie die angrenzende äußere Gürtellage.

Eine besonders hohe Alterungsbeständigkeit ergibt sich, wenn die innere Laufstreifenschicht eine A-Shore-Härte von mindestens 70 aufweist. Vorzugsweise liegt die Härte der inneren Laufstreifenschicht zwischen 71 und 74.

Weil die Erfindung die Weichmacherdiffusion in die Gürtellagenränder gut drosselt, ist in der äußeren Laufstreifenschicht eine höhere Dosierung von Weichmachern möglich. Vorzugsweise werden die Weichmacher so hoch dosiert, daß die äußere Laufstreifenschicht eine A-Shore-Härte kleiner oder gleich 63 aufweist. Dabei empfiehlt es sich bei PKW-Reifen mit Rücksicht auf den Abrieb die Härte der äußeren Laufstreifenschicht nicht unter 60 abzusenken. Für Anhänger des privaten Gebrauchs wie einachsige Gepäckanhänger oder Wohnwagen kann die Härte bis auf 57 abgesenkt werden. Infolge der geringen jährlichen Laufleistung fielen diese Reifen bislang im allgemeinen nicht infolge Abriebes, sondern infolge Alterung aus. Der Vorteil der verzögerten Alterung in den hochbelasteten Reifenschultern tritt in diesen Anwendungsfällen besonders deutlich zutage bei gleichzeitiger Verringerung der Pendelneigung des Anhängers infolge steileren Seitenkraftanstieges über dem Schräglaufwinkel.

Die beste Lenkpräzision wird erzielt, wenn die innere Laufstreifenschicht um mindestens 7 A-Shore-Härtegrade härter ist als die angrenzende äußere Laufstreifenschicht. Nach den bisherigen Versuchen bleibt die dynamische Tüchtigkeit an der Phasengrenzfläche zwischen innerer und äußerer Laufstreifenschicht hinreichend erhalten, wenn der Härteunterschied nicht größer als 20 A-Shore-Härtegrade ist.

Eine besonders vorteilhafte Kombination von hoher Alterungsbeständigkeit, günstigem Fahrverhalten und geringem Herstellungspreis erzielen die Reifen dann, wenn die innere Schicht des Laufstreifens über den Rändern der Gürtellagen mindestens doppelt so dick ist wie in der Reifenmitte und eine A-Shore-Härte von mindestens 70 aufweist und wenn die äußere Laufstreifenschicht eine A-Shore-Härte zwischen 57 und 63 aufweist, wobei die innere Laufstreifenschicht um mindestens 7 A-Shore-Härtegrade härter ist als die äußere Laufstreifenschicht.

Um erfindungsgemäße Reifen besonders wirtschaftlich herstellen zu können, empfiehlt es sich, daß die Kautschukmischungen der inneren und äußeren Laufstreifenschicht in den Mischungsbestandteilen, die Kautschuk sind, übereinstimmen, also nach Art der verwendeten Polymere und deren Mengenverhältnis zueinander. Eine Differenzierung zwischen diesen beiden Kautschukschichten erfolgt vorzugsweise erst bei Zusatz der nicht kautschukartigen Stoffe, insbesondere bei der Dosierung der Weichmacher.

Die Erfindung wird nachfolgend anhand eines Ausführungsbeispieles näher erläutert und mit einer Figur illustriert.

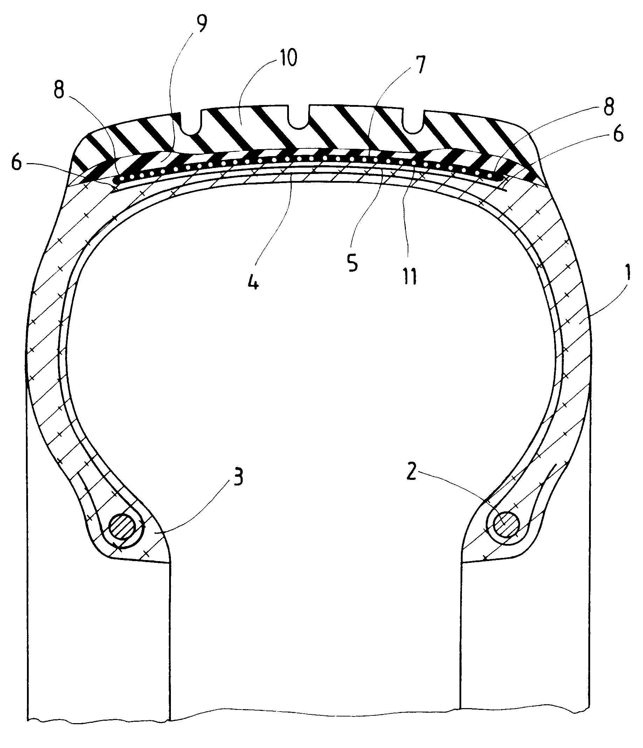

Die Figur zeigt einen erfindungsgemäßen Fahrzeugluftreifen 1 für PKW im Schnitt. Um dessen Wulstkerne 2 ist in den Wülsten 3 eine einlagige Karkasse 4 geschlagen. Im Bereich der Aufstandsfläche befinden sich auf der Karkasse 4 die Gürtellage 5 mit ihren Rändern 6 und die Gürtellage 7 mit ihren Rändern 8. Die Gürtellage 7 ist in ihrer Dicke geschwärzt dargestellt. Die weißen Punkte sind die Schnittstellen der Festigkeitsträger 11 in dieser Gürtellage 7. Die Gürtellage 5 ist hingegen wie die Karkasse 4 zur Übersichtlichkeit nur angedeutet. Gerade bei der hier gezeigten Beschränkung der Gürtellagenanzahl auf ihr Minimum - zur Bildung des für die Gürtelfunktion erforderlichen Dreiecksverbandes wird die Karkaßlage mit herangezogen - ist es von besonderer Wichtigkeit, daß die Gummiqualität der Gürtellagen 5, 7 an ihren hochbeanspruchten Enden 6, 8 in ihren hochbeanspruchten Elastizitätsmoduli über der Zeit möglichst gut erhalten bleibt.

Oberhalb der Gürtellage 7 schließt sich der Laufstreifen mit seiner inneren Schicht 9 und seiner äußeren Schicht 10 an. Die innere Laufstreifenschicht 9 weist in den Schulterbereichen über den Gürtellagenenden 6, 8 eine Stärke a von 3,8 mm und in der Mitte eine Stärke b von 1,8 mm auf. Die äußere Schicht 10 des Laufstreifens weist in den Schulterbereichen eine Stärke d von 10,5 mm auf. Die Profilrillentiefe t beträgt 7,5 mm.

Durch Zusatz von Weichmachern ist die A-Shore-Härte der äußeren Schicht 10 des Laufstreifens auf 62 eingestellt. Durch diese große Weichheit wird nicht nur ein hoher Abrollkomfort erzielt, sondern auch besonders hohe Reibungsbeiwerte in der Umfangsrichtung und der axialen Richtung auf feuchten Straßen. Nachfolgend wird eine geeignete Kautschukmischung mit so geringer Härte für die äußere Schicht 10 des Laufstreifens offenbart:

| | |
|---|---|
| Naturkautschuk | 70 phr |
| Polybutadien | 30 phr |
| HAF Ruß | 80 phr |
| Aromatischer Weichmacher | 50 phr |
| Ash | 3.5 phr |
| Stearinsäure | 2.5 phr |
| Zinkweiß | 3 phr |
| Schwefel | 1.5 phr |
| Beschleuniger | 1.5 phr |

In obiger Tabelle sind die Gewichtsanteile der Mischungsbestandteile bezogen auf 100 Gewichtsanteile Kautschuk angegeben.

Die Kautschukmischung für die innere Laufstreifenschicht 9 unterscheidet sich von der für die äußere Laufstreifenschicht 10 nur durch einen auf 70 phr verringerten Rußgehalt und einen auf 12 phr verringerten Weichmachergehalt.

Eine Diffusion des Weichmachers aus der äußeren Laufstreifenschicht 10 in den Gürtelgummi wird durch die innere Laufstreifenschicht 9 gehemmt und zwar insbesondere im Bereich der hochbelasteten Gürtellagenenden 6, 8 durch die dort besonders dicke Gestaltung.

Neben dem Vorteil, daß die Gürtelfestigkeit über einem längeren Zeitintervall erhalten bleibt, ermöglicht die Erfindung auch den Einsatz besonders weicher Laufstreifenmischungen und führt damit zur weiter erhöhten Sicherheit auf feuchten Straßen.

## Patentansprüche

1. Fahrzeugluftreifen (1) mit Gürtellagen (5, 7), die höchstens 8 % Weichmacher enthalten und mit einem in zwei Schichten (9, 10) unterteilten Laufstreifen, wobei dessen äußere Schicht (10) mindestens 25 % Weichmacher enthält und weicher ist als dessen innere Schicht (9),
**dadurch gekennzeichnet,** daß die innere Schicht (9) des Laufstreifens über den axialen Rändern (6, 8) der Gürtellagen (5, 7) dicker ist als in der Reifenmitte und höchstens 10 % Weichmacher enthält.

2. Fahrzeugluftreifen (1) nach Anspruch 1 **dadurch gekennzeichnet,** daß die innere Schicht (9) des Laufstreifens über den axialen Rändern (6, 8) der Gürtellagen (5, 7) mindestens doppelt so dick ist wie in der Reifenmitte.

3. Fahrzeugluftreifen (1) nach Anspruch 1 **dadurch gekennzeichnet,** daß die innere Schicht (9) des Laufstreifens die gleiche Weichmacherdosierung aufweist wie die äußere Gürtellage (7).

4. Fahrzeugluftreifen (1) nach Anspruch 1 **dadurch gekennzeichnet,** daß die innere Laufstreifenschicht (9) eine A-Shore-Härte von mindestens 70 aufweist.

5. Fahrzeugluftreifen (1) nach Anspruch 4 **dadurch gekennzeichnet,** daß die innere Laufstreifenschicht (9) eine A-Shore-Härte zwischen 71 und 74 aufweist.

6. Fahrzeugluftreifen (1) nach Anspruch 1 **dadurch gekennzeichnet,** daß die äußere Laufstreifenschicht (10) eine A-Shore-Härte zwischen 57 und 63 aufweist.

7. Fahrzeugluftreifen (1) nach Anspruch 1 **dadurch gekennzeichnet,** daß die innere Laufstreifenschicht (9) um mindestens 7 A-Shore-Härtegrade härter ist als die äußere Laufstreifenschicht (10).

8. Fahrzeugluftreifen (1) nach Anspruch 2 **gekennzeichnet durch** die Kombination der kennzeichnenden Merkmale der Ansprüche 4 und 6 und 7.

9. Fahrzeugluftreifen (1) nach Anspruch 1 **dadurch gekennzeichnet,** daß die Kautschukmischungen der inneren (9) und der äußeren (10) Laufstreifenschicht in den Mischungsbestandteilen, die Kautschuk sind, übereinstimmen.

## Claims

1. Pneumatic vehicle tyre (1) having bead plies (5, 7), which contain at most 8 % plasticizer, and a tread strip, which is divided into two layers (9, 10), the outer layer (10) containing at least 25 % plasticizer and being softer than the inner layer (9) thereof, characterised in that the inner layer (9) of the tread strip is thicker over the axial edges (6, 8) of the belt plies (5, 7) than in the centre of the tyre and contains at most 10 % plasticizer.

2. Pneumatic vehicle tyre (1) according to claim 1, characterised in that the inner layer (9) of the tread strip is at least twice as thick over the axial edges (6, 8) of the belt plies (5, 7) as in the centre of the tyre.

3. Pneumatic vehicle tyre (1) according to claim 1, characterized in that the inner layer (9) of the tread strip has the same dosed quantity of plasticizer as the outer belt ply (7).

4. Pneumatic vehicle tyre (1) according to claim 1, characterized in that the inner tread strip layer (9) has a Shore A hardness of at least 70.

5. Pneumatic vehicle tyre (1) according to claim 4, characterised in that the inner tread strip layer (9) has a Shore A hardness of between 71 and 74.

6. Pneumatic vehicle tyre (1) according to claim 1, characterised in that the outer tread strip layer (10) has a Shore A hardness of between 57 and 63.

7. Pneumatic vehicle tyre (1) according to claim 1, characterised in that the inner tread strip layer (9) is harder by at least 7 degrees of Shore A hardness than the outer tread strip layer (10).

8. Pneumatic vehicle tyre (1) according to claim 2, characterized by the combination of the characterising features of claims 4, 6 and 7.

9. Pneumatic vehicle tyre (1) according to claim 1, characterised in that the rubber mixtures of the inner tread strip layer (9) and of the outer tread strip layer (10) are identical in respect of the mixture ingredients, which are rubber.

## Revendications

1. Pneumatique de véhicule automobile (1) comportant des nappes de ceinture (5, 7) qui contiennent au maximum 8 % de plastifiant et comportant une bande de roulement, partagée en deux couches (9, 10), dont la couche extérieure (10) contient au moins 25 % de plastifiant et est plus souple que sa couche intérieure (9), caractérisé en ce que la couche intérieure (9) de la bande de roulement est plus épaisse sur les bords axiaux (6, 8) des nappes de ceinture (5, 7) qu'au milieu du pneumatique et contient au maximum 10 % de plastifiant.

2. Pneumatique de véhicule automobile (1) selon la revendication 1, caractérisé en ce que la couche intérieure (9) de la bande de roulement sur les bords axiaux (6, 8) des nappes de ceinture (5, 7) est au moins deux fois plus épaisse qu'au milieu du pneumatique.

3. Pneumatique de véhicule automobile (1) selon la revendication 1, caractérisé en ce que la couche intérieure (9) de la bande de roulement présente le même dosage de plastifiant que la nappe de ceinture extérieure (7).

4. Pneumatique de véhicule automobile (1) selon la revendication 1, caractérisé en ce que la couche intérieure (9) de la bande de roulement présente une dureté shore A de 70 au minimum.

5. Pneumatique de véhicule automobile (1) selon la revendication 4, caractérisé en ce que la couche intérieure (9) de la bande de roulement présente une dureté shore A comprise entre 71 et 74.

6. Pneumatique de véhicule automobile (1) selon la revendication 1, caractérisé en ce que la couche extérieure (10) de la bande de roulement présente une dureté shore A comprise entre 57 et 63.

7. Pneumatique de véhicule automobile (1) selon la revendication 1, caractérisé en ce que la couche intérieure (9) de la bande de roulement est plus dure, d'au moins 7 degrés de dureté shore A, que la couche extérieure (10) de la bande de roulement.

8. Pneumatique de véhicule automobile (1) selon la revendication 2, caractérisé par la combinaison des caractéristiques de la partie caractérisante des revendications 4, 6 et 7.

9. Pneumatique de véhicule automobile (1) selon la revendication 1, caractérisé en ce que les mélanges de caoutchouc de la couche intérieure (9) et de la couche extérieure (10) de la bande de roulement, coïncident dans leurs constituants, qui sont du caoutchouc.
